(19) Europäisches Patentamt / European Patent Office / Office européen des brevets

(11) **EP 4 760 788 A1**

(12) **EUROPEAN PATENT APPLICATION**

(43) Date of publication:
**17.06.2026 Bulletin 2026/25**

(21) Application number: **25209067.5**

(22) Date of filing: **16.10.2025**

(51) International Patent Classification (IPC):
*H01M 4/04* (2006.01)          *H01M 4/13* (2010.01)
*H01M 4/139* (2010.01)        *H01M 10/42* (2006.01)
*H01M 50/35* (2021.01)

(52) Cooperative Patent Classification (CPC):
**H01M 4/13; H01M 4/0404; H01M 4/139;
H01M 10/4235; H01M 50/35;** H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.12.2024 JP 2024218943**

(71) Applicant: **TOYOTA JIDOSHA KABUSHIKI
KAISHA
Toyota-shi, Aichi-ken 471-8571 (JP)**

(72) Inventors:
• **NAKASHIMA, Satoshi**
  **Toyota-shi, 471-8571 (JP)**
• **TATEISHI, Mitsuru**
  **Toyota-shi, 471-8571 (JP)**
• **HIRUKAWA, Tomofumi**
  **Toyota-shi, 471-8571 (JP)**
• **UEDA, Masashi**
  **Toyota-shi, 471-8571 (JP)**

(74) Representative: **Kuhnen & Wacker
Patent- und Rechtsanwaltsbüro PartG mbB
Prinz-Ludwig-Straße 40 A
85354 Freising (DE)**

(54) **ELECTRODE STACK, BATTERY, METHOD FOR PRODUCING ELECTRODE STACK, AND METHOD FOR PRODUCING BATTERY**

(57)    The present disclosure provides an electrode stack, a battery, a method for producing an electrode stack and a method for producing a battery, which can maintain the facing area between the positive electrode active material layer and negative electrode active material layer while improving the diffusibility of the electrolyte solution and the gas emission property during charge-discharge. The electrode stack of the disclosure have an active material layer and a current collector layer in contact with the active material layer, the electrode stack having voids with maximum dimensions of 10 $\mu$m or greater in the surface of the active material layer on the current collector layer side and/or in the active material layer.

FIG. 1

EP 4 760 788 A1

**Description**

FIELD

The present disclosure relates to an electrode stack, a battery, a method for producing an electrode stack and a method for producing a battery.

BACKGROUND

A battery generally comprises a stack comprising a positive electrode collector layer, a positive electrode active material layer, a separator layer or solid electrolyte layer, a negative electrode active material layer and a negative electrode collector layer, housed in an outer container. For a battery comprising an electrolyte solution, it has been proposed to provide slits or grooves on the active material layer or on the separator layer in order to improve diffusibility of the electrolyte solution during injection, as well as emission of gas during charge-discharge (PTLs 1 to 6).

PTL 1, for example, discloses a non-aqueous electrolyte secondary battery wherein grooves are formed on the surface of the active material layer from one edge extending in the lengthwise direction of the electrode plate, to the other edge, with the cross-sectional area of the grooves increasing from the center section toward the edge of the electrode plate. The non-aqueous electrolyte secondary battery described in PTL 1 employs an electrode that, by having grooves formed on the electrode surface, can increase both diffusion of the injected electrolyte solution into the power generating element and gas removal from the power generating element, as well as removal speed for the solvent.

Also, PTL 2 discloses a secondary battery comprising an electrode group having a positive plate and a negative plate, each with a combination layer comprising an active material formed on the surface of a current collector, wound or layered via a separator, wherein a plurality of grooves are formed on the surface of the combination layer of either or both the positive plate and negative plate, the grooves having curved sections at the side edges and the bottom center section of each groove. The secondary battery described in PTL 2 is considered to be a high-capacity secondary battery with excellent impregnability for the electrolyte solution, and excellent cycle characteristics and reliability.

PTL 3 discloses a nonaqueous electrolyte solution secondary battery comprising an electrode group having a high-density positive electrode with a positive electrode active material layer formed on at least one side of a positive electrode collector, a high-density negative electrode with a negative electrode active material layer formed on at least one side of a negative electrode collector, and a separator situated between the positive and negative electrodes, with a nonaqueous electrolyte solution being impregnated into the electrode group, wherein the specific surface area per unit area of the positive electrode active material layer of the positive electrode is 0.5 to 1.0 times the specific surface area per unit area of the negative electrode active material layer of the negative electrode which is facing the positive electrode across the separator. The nonaqueous electrolyte solution secondary battery described in PTL 3 is a high-energy-density nonaqueous electrolyte solution secondary battery designed to allow uniform permeation distribution of the nonaqueous electrolyte solution between the positive and negative electrodes, while also allowing the positive electrode to be impregnated with a sufficient amount of the nonaqueous electrolyte solution, and to stabilize the initial properties, and especially the discharge characteristic during high current discharge, and to improve the charge-discharge cycle characteristic.

PTL 4 discloses a nonaqueous electrolyte solution battery constructed with an external body housing an electrode body, formed with a separator situated between a positive electrode and negative electrode, and a nonaqueous electrolyte solution, the positive electrode and negative electrode having an electrode mixture layer comprising an active material on one or both sides of a current collector, wherein the electrode mixture layer present on at least one side of either or both the positive electrode and negative electrode has a thickness of 100 $\mu$m or greater and a plurality of grooves with openings on the surface on the opposite side from the current collector, the width L1 of the grooves being 100 to 800 $\mu$m, and the pitch L2 between adjacent grooves being 2 to 5 mm. The nonaqueous electrolyte solution battery described in PTL 4 is considered to be a nonaqueous electrolyte solution battery with high electric power generation efficiency, while using electrodes with a thick electrode mixture layer.

PTL 5 discloses a separator to be used in a power storage device comprising an electrode body, having a positive/negative electrode multilayer structure in which a positive electrode and negative electrode are layered via a separator, a case that houses the electrode body, and an electrolyte, wherein the separator has one or more grooves extending from the end of the separator forming one positive/negative electrode multilayer structure, along the direction toward the other end. The separator described in PTL 5 is thought to be able to satisfactorily improve impregnability for electrolytes in power storage devices.

PTL 6 discloses a nonaqueous electrolyte solution battery having a nonaqueous electrolyte solution injected into a stack obtained by stacking a positive electrode and negative electrode via a separator, wherein roughening treatment is carried out on at least one side of the separator. The nonaqueous electrolyte solution battery described in PTL 6 shortens the time for permeation of the electrolyte solution into the electrode group, and is thus considered to be a nonaqueous electrolyte solution battery with satisfactory mass productivity.

[CITATION LIST]

[PATENT LITERATURE]

[PTL 1] Japanese Unexamined Patent Publication No. 2004-207253
[PTL 2] International Patent Publication No. WO2008/053880
[PTL 3] Japanese Unexamined Patent Publication No. 2004-006275
[PTL 4] Japanese Unexamined Patent Publication No. 2012-181978
[PTL 5] Japanese Unexamined Patent Publication No. 2024-92439
[PTL 6] Japanese Unexamined Patent Publication HEI No. 6-333550

SUMMARY

[TECHNICAL PROBLEM]

In the batteries described in PTLs 1 to 4, slits or grooves are formed on the surface of the separator layer side of the active material layer. When slits or grooves are thus provided on the surface of the active material layer, the "facing area" between the active material layer comprising the slits or grooves and the active material layer facing them may be reduced, thus lowering the battery capacity. Particularly when grooves are formed on the surface of the positive electrode active material layer, the distance between the positive electrode active material layer and the negative electrode active material layer is increased at the sections where the grooves are formed, and lithium metal, for example, is deposited at the locations of the facing negative electrode active material layers near the grooves of the positive electrode active material layer.

It is therefore an object of the present disclosure to provide an electrode stack, a battery, a method for producing an electrode stack and a method for producing a battery, which can maintain the facing area between the positive electrode active material layer and negative electrode active material layer while improving the diffusibility of the electrolyte solution and the gas emission property during charge-discharge.

[SOLUTION TO PROBLEM]

The present disclosure achieves the object described above by the following means.

(Aspect 1)

An electrode stack having an active material layer and a current collector layer in contact with the active material layer,
the electrode stack having voids with maximum dimensions of 10 $\mu$m or greater in the surface of the active material layer on the current collector layer side and/or in the active material layer.

(Aspect 2)

The electrode stack according to aspect 1, wherein the maximum dimension is 10 mm or greater.

(Aspect 3)

An electrode stack according to aspect 1 or 2, wherein the density of the active material layer on the stacking direction side of the voids is essentially the same as the density of the active material layer at the locations where the voids are not present.

(Aspect 4)

The electrode stack according to any one of aspects 1 to 3, wherein at least a portion of the surface of the current collector layer on the active material layer side is subjected to chemical conversion treatment.

(Aspect 5)

The electrode stack according to any one of aspects 1 to 4, wherein the voids have one or more of the following structures:

(i) a structure in which the voids extend out in the in-plane direction in an approximately radial manner from one end face side near the injection hole of the active material layer, toward the other end face side of the active material layer,
(ii) a structure in which the voids form branched fluid channels extending in the in-plane direction,
(iii) a structure in which the voids do not reach to at least one edge of the active material layer, and
(iv) a structure in which the voids are spiral or spider web-like.

(Aspect 6)

A battery having an electrode stack according to any one of aspects 1 to 5.

(Aspect 7)

A method for producing an electrode stack according to any one of aspects 1 to 5 or a method for producing a battery according to aspect 6, the method comprising:

(a) coating the surface of the current collector layer or the surface of the electrode mixture layer on the current collector layer with ethylene carbonate in a specified pattern,
(b) coating the electrode mixture layer onto the surface of the current collector layer or the electrode mixture layer on which the ethylene carbonate has been coated, to form an active material layer, and
(c) dissolving and/or melting the ethylene carbonate in the active material layer to form voids corresponding to the specified pattern.

(Aspect 8)

The method according to aspect 7, wherein in step (c), the electrolyte solution is injected into the active material layer to dissolve the ethylene carbonate.

(Aspect 9)

The method according to aspect 8, wherein the electrolyte solution does not contain ethylene carbonate.

(Aspect 10)

The method according to any one of aspects 7 to 9, which includes at least partial heating of the current collector layer or the electrode mixture layer on the current collector layer, before step (a).

(Aspect 11)

The method according to any one of aspects 7 to 10, which includes a step of cooling the current collector layer, after step (a) and before step (b).

[ADVANTAGEOUS EFFECTS OF INVENTION]

With the electrode stack and battery of the disclosure, it is possible to maintain the facing area between the positive electrode active material layer and the negative electrode active material layer while improving the diffusibility of the electrolyte solution and the discharge property of gas during charge-discharge.

BRIEF DESCRIPTION OF DRAWINGS

Fig. 1 is a schematic diagram for illustration of the structure of voids according to the disclosure.

Fig. 2 is a schematic diagram illustrating a step of coating ethylene carbonate.

Fig. 3 is a schematic diagram illustrating a method for producing an electrode stack and a method for producing a battery.

Fig. 4 is a schematic diagram illustrating a method for producing an electrode stack and a method for producing a battery.

Fig. 5A is a schematic diagram illustrating an Example of the disclosure.

Fig. 5B is a schematic diagram illustrating an Example of the disclosure.

Fig. 5C is a schematic diagram illustrating an Example of the disclosure.

Fig. 5D is a schematic diagram illustrating an Example of the disclosure.

Fig. 5E is a schematic diagram illustrating an Example of the disclosure.

DESCRIPTION OF EMBODIMENTS

<Electrode stack>

The electrode stack of the disclosure has an active material layer and a current collector layer in contact with the active material layer,
the electrode stack having voids with maximum dimensions of 10 $\mu$m or greater in the surface of the active material layer on the current collector layer side and/or in the active material layer.
With this electrode stack, it is possible to maintain the facing area between the active material layer comprising voids and the active material layer facing that active material layer, while improving diffusibility of the electrolyte solution and emission of gas during charge-discharge.
In conventional electrode stacks, slits or grooves have been formed on the separator layer or solid electrolyte layer side of the active material layer in order to improve diffusibility of the electrolyte solution during injection and to improve emission of gas during charge-discharge. However, the present inventors have found that when slits or grooves are provided on the surface of the active material layer, the distance between the positive electrode active material layer and the negative electrode active material layer differs at the locations with grooves and the locations without grooves, thus lowering the battery capacity and potentially resulting in deposition of lithium metal.
In contrast, the electrode stack of the present disclosure has voids with maximum diameters of 10 $\mu$m or greater on the surface of the current collector layer side of the active material layer and/or inside the active material layer, thus making it possible to maintain the facing area between the positive electrode active material layer and the negative electrode active material layer while improving diffusibility of the electrolyte solution during injection, and improving emission of gas during charge-discharge.
The diffusibility of an electrolyte solution can generally be evaluated based on fluid resistance, where the fluid resistance is calculated by the following formula:

$$\text{(Fluid resistance)} = \text{(friction resistance)} + \text{(pressure resistance)}$$

In an electrode stack according to one aspect of the disclosure, voids of specified dimensions are present on the surface of the current collector layer side of the active material layer, whereby when the electrolyte solution is injected, the electrolyte solution flows along the surface of the current collector layer. This allows voids of specified dimensions to be provided on the separator layer side of the active material layer, thereby reducing friction resistance compared to when the electrolyte solution flows along the surface of the separator layer during injection of the electrolyte solution, and therefore using the electrode stack of the disclosure can reduce fluid resistance and thus improve diffusibility of the electrolyte solution.
Furthermore, since the gas generated during charge-discharge tends to be generated from the side of the active material layer near the current collector layer, using the electrode stack of the disclosure can improve the gas emission property during charge-discharge, compared to a conventional electrode stack.
The active material layer of the electrode stack of the disclosure may be formed directly on the current collector layer, or the active material layer fabricated using a transfer substrate, for example, may be formed on the current collector layer by transfer.

Embodiments of the disclosure will now be explained in detail. However, the present disclosure is not limited to the embodiments described below, and various modifications may be implemented which do not depart from the gist thereof. Similar elements in the drawings are indicated by like reference numerals and will be explained only once.

(Active material layer)

The active material layer of the disclosure comprises at least an active material. If necessary, the active material layer may further comprise one or more components such as a solid electrolyte, conductive aid or binder. For the purpose of the disclosure, the active material may be either a positive electrode active material or a negative electrode active material.

The active material content in the active material layer of the disclosure is not particularly restricted and may be 1 mass% or higher, 5 mass% or higher, 10 mass% or higher, 15 mass% or higher or 20 mass% or higher, and 50 mass% or lower, 45 mass% or lower, 40 mass% or lower, 35 mass% or lower or 30 mass% or lower.

The material of the positive electrode active material is not particularly restricted. Examples of positive electrode active materials include, but are not limited to, lithium cobaltate ($LiCoO_2$), lithium nickelate ($LiNiO_2$), lithium manganate ($LiMn_2O_4$), lithium nickelate-cobaltate-manganate (NCM: $LiCO_{1/3}Ni_{1/3}Mn_{1/3}O_2$), lithium nickelate-cobaltate-aluminate ($LiNi_{0.8}(CoAl)_{0.2}O_2$) and Li-Mn spinel substituted with different elements, having the composition represented by $Li_{1+x}Mn_{2-x-y}M_yO_4$ (where M is one or more metal elements selected from among Al, Mg, Co, Fe, Ni and Zn).

The material of the negative electrode active material is not particularly restricted. The negative electrode active material may be lithium metal, or any material capable of occluding and releasing metal ions such as lithium ions. Examples of materials capable of occluding and releasing metal ions such as lithium ions include, but are not limited to, alloy-based negative electrode active materials, carbon materials and lithium titanate ($Li_4Ti_5O_{12}$).

Alloy-based negative electrode active materials are not particularly restricted, and examples include Si alloy-based negative electrode active materials and Sn alloy-based negative electrode active materials. Si alloy-based negative electrode active materials include silicon, silicon oxides, silicon carbides and silicon nitrides, as well as their solid solutions. Si alloy-based negative electrode active materials include metal elements other than silicon, such as iron (Fe), cobalt (Co), antimony (Sb), bismuth (Bi), lead (Pb), nickel (Ni), copper (Cu), zinc (Zn), germanium (Ge), indium (In), tin (Sn) and titanium (Ti). Sn alloy-based negative electrode active materials include tin, tin oxides and tin nitrides, as well as their solid solutions. Sn alloy-based negative electrode active materials include metal elements other than tin, such as iron (Fe), cobalt (Co), antimony (Sb), bismuth (Bi), lead (Pb), nickel (Ni), copper (Cu), zinc (Zn), germanium (Ge), indium (In), tin (Sn) and titanium (Ti).

Carbon materials are not particularly restricted, and include hard carbon, soft carbon and graphite, for example.

The form of the active material is not particularly restricted, and it may be particulate, for example. When the active material is particulate, the particle diameter $D_{50}$ of the active material may be 1 nm or larger, 5 nm or larger or 10 nm or larger, and 500 $\mu$m or smaller, 100 $\mu$m or smaller, 50 $\mu$m or smaller or 30 $\mu$m or smaller, for example. The particle diameter $D_{50}$ is the 50% cumulative particle diameter (median diameter) in the volume-based particle size distribution determined by laser diffraction/scattering.

The thickness of the active material layer of the disclosure is not particularly restricted and may be 0.1 $\mu$m or greater, 1 $\mu$m or greater, 3 $\mu$m or greater, 5 $\mu$m or greater or 10 $\mu$m or greater, and 1000 $\mu$m or less, 700 $\mu$m or less, 500 $\mu$m or less, 300 $\mu$m or less or 100 $\mu$m or less.

The density of the active material layer for the disclosure is not particularly restricted and may be 0.5 $g/cm^3$ or higher, 0.7 $g/cm^3$ or higher, 1.0 $g/cm^3$ or higher, 1.5 $g/cm^3$ or higher or 2.0 $g/cm^3$ or higher, and 15 $g/cm^3$ or lower, 10 $g/cm^3$ or lower, 8 $g/cm^3$ or lower, 6 $g/cm^3$ or lower, 4 $g/cm^3$ or lower or 3 $g/cm^3$ or lower.

For the purpose of the disclosure, the density of the active material layer on the stacking direction side of the voids may be essentially the same as or different from the density of the active material layer at the locations where the voids are not present.

As an example of fabricating an electrode stack having voids on the current collector layer side of the active material layer, wherein the density of the active material layer on the stacking direction side of the voids is essentially the same as the density of the active material layer at the locations where the voids are not present, the method of the disclosure described below may be used, wherein an electrode mixture is directly coated onto a current collector layer coated with ethylene carbonate in a specified pattern, and it is then pressed with a pressing member to form an active material layer having recesses corresponding to the specified pattern. This type of electrode stack can be fabricated by directly coating an electrode mixture onto a transfer substrate having heights with a specified pattern to form an active material layer having recesses corresponding to the specified pattern, transferring the obtained active material layer to another transfer substrate, and further transferring it onto a current collector layer. The phrase "essentially the same" as used herein means that the difference between the two values is no greater than 15%, no greater than 10%, no greater than 8%, no greater than 6% or no greater than 4% of the larger of the two values.

It is possible to fabricate an electrode stack having voids in the active material layer, wherein the density of the active material layer on the stacking direction side of the voids, is essentially the same as the density of the active material layer at the locations where the voids are not present, by further coating the electrode mixture onto the electrode mixture layer on which ethylene carbonate has been coated in a specified pattern, and then pressing it with a pressing member.

With an electrode stack having voids on the current collector layer side of the active material layer, wherein the density of the active material layer on the stacking direction side of the voids is essentially different from the density of the active material layer at the locations where the voids are not present, it is possible to form an active material layer by directly coating an electrode mixture onto a transfer substrate to form an electrode mixture layer, and pressing the obtained electrode mixture layer with a pressing member having heights in a specified pattern. With the active material layer produced in this manner, it is possible to obtain an electrode stack wherein the density of the active material layer on the stacking direction side of the voids is higher than the density of the active material layer at the locations where the voids are not present. The phrase "essentially different" as used herein means that the difference between the two values is greater than 4%, greater than 6%, greater than 8%, greater than 10% or greater than 15%, of the larger of the two values.

It is possible to obtain an electrode stack having voids in the active material layer, wherein the density of the active material layer on the stacking direction side of the voids is essentially different from the density of the active material layer at the locations where the voids are not present, by layering an electrode mixture layer with recesses obtained as described above, on another electrode mixture layer with the recesses facing the surface of the other electrode mixture layer.

According to the disclosure, the solid electrolyte optionally included in the active material layer may be any one that is known as a solid electrolyte for a secondary battery. Solid electrolytes include inorganic solid electrolytes such as sulfide solid electrolytes, oxide solid electrolytes and halide solid electrolytes, and organic high-molecular electrolytes such as polymer electrolytes. From the viewpoint of heat resistance, the electrolyte is most preferably a sulfide solid electrolyte or oxide solid electrolyte. The solid electrolyte may be particulate, for example. The solid electrolyte may be of a single type alone, or two or more different types may be used in combination.

Examples of sulfide solid electrolytes include solid electrolytes containing Li element, X elements (where X is at least one type from among P, As, Sb, Si, Ge, Sn, B, Al, Ga and In), and S element. The sulfide solid electrolyte may further comprise either or both 0 element and a halogen element. Examples of halogen elements include F element, Cl element, Br element and I element. The sulfide solid electrolyte may be glass (an amorphous form) or a glass ceramic. Examples of sulfide solid electrolytes include, but are not limited to, $Li_2S\text{-}P_2S_5$, $LiI\text{-}Li_2S\text{-}P_2S_5$, $LiI\text{-}LiBr\text{-}Li_2S\text{-}P_2S_5$, $Li_2S\text{-}SiS_2$, $Li_2S\text{-}GeS_2$ and $Li_2S\text{-}P_2S_5\text{-}GeS_2$.

Examples of oxide solid electrolytes include, but are not limited to, $Li_7La_3Zr_2O_{12}$, $Li_{7-x}La_3Zf_{1-x}Nb_xO_{12}$, $Li_{7-3x\text{-}}La_3Zr_2Al_xO_{12}$, $Li_{3x}La_{2/3-x}TiO_3$, $Li_{1+x}Al_xTi_{2-x}(PO_4)_3$, $Li_{1+x}AlxGe_{2-x}(PO_4)_3$, $Li_3PO_4$ and $Li_{3+x}PO_{4-x}N_x$(LiPON). The oxide solid electrolyte may be either amorphous or crystalline.

Halide solid electrolytes include, but are not limited to, $NaBH_4$, $NaB_{10}H_{10}$, $NaCB_9H_{10}$, $NaCB_{11}H_{12}$ and $NaB_{12}Cl_{12}$.

Polymer electrolytes include, but are not limited to, polyethylene oxide (PEO), polypropylene oxide (PPO), and their copolymers.

The content of the solid electrolyte optionally included in the active material layer of the disclosure is not particularly restricted, and may be 1 mass% or higher, 5 mass% or higher, 10 mass% or higher, 13 mass% or higher or 15 mass% or higher, and 30 mass% or lower, 20 mass% or lower, 15 mass% or lower or 10 mass% or lower.

According to the disclosure, a conductive aid optionally included in the active material layer may be any one that is known as a conductive aid for a secondary battery. Conductive aids include, specifically, carbon materials such as Ketjen black (KB), vapor-grown carbon fibers (VGCF), acetylene black (AB), carbon nanotubes (CNT), carbon nanofibers (CNF), carbon black, coke and graphite. The conductive aid used may be a metal material that can withstand the environment during use of the battery. The conductive aid used may be of a single type alone, or a combination of two or more different types. The conductive aid may be in any of various forms such as powdered or filamentous forms.

The content of the conductive aid optionally included in the active material layer of the disclosure is not particularly restricted, and may be 0.1 mass% or higher, 0.5 mass% or higher, 1 mass% or higher, 3 mass% or higher or 5 mass% or higher, and 20 mass% or lower, 15 mass% or lower, 10 mass% or lower, 8 mass% or lower or 5 mass% or lower.

The binder optionally included in the active material layer for the purpose of the disclosure may be one that is known as a binder for use in secondary batteries. Such binders include styrene-butadiene rubber (SBR), carboxymethyl cellulose (CMC), acrylonitrile-butadiene rubber (ABR), butadiene rubber (BR), polyvinylidene fluoride (PVDF) and polytetrafluoroethylene (PTFE). The binder may be of a single type alone, or a combination of two or more different types may be used.

The content of the binder optionally included in the active material layer of the disclosure is not particularly restricted, and may be 0.1 mass% or higher, 0.5 mass% or higher, 1 mass% or higher, 3 mass% or higher or 5 mass% or higher, and 20 mass% or lower, 15 mass% or lower, 10 mass% or lower, 8 mass% or lower or 5 mass% or lower.

(Current collector layer)

According to the disclosure, the current collector layer is present in the electrode stack and is in contact with the active material layer.

The material of the current collector layer of the disclosure is not particularly restricted, and examples include copper (Cu), nickel (Ni), chromium (Cr), gold (Au), platinum (Pt), silver (Ag), aluminum (Al), iron (Fe), titanium (Ti), zinc (Zn), cobalt (Co), stainless steel and aluminum alloy.

For the purpose of the disclosure, the current collector forming the current collector layer may be a positive electrode collector, a negative electrode collector, or both a positive electrode collector and a negative electrode collector. When the current collector layer is both a positive electrode collector and a negative electrode collector, the current collector layer may have the positive electrode collector and negative electrode collector attached.

According to the disclosure, at least a portion of the surface of the current collector layer on the active material layer side may be subjected to chemical conversion treatment. When the electrode stack of the disclosure is to be produced by the method for producing an electrode stack of the disclosure, at least a portion of the surface of the current collector layer may be subjected to chemical conversion treatment to improve the wettability of the surface of the current collector layer for ethylene carbonate, thereby allowing ethylene carbonate to be evenly coated.

According to the disclosure, the surface of the current collector layer may be subjected to chemical conversion treatment by a known method for forming a corrosion resistant film, where the chemical conversion treatment may be phosphate, chromate, fluoride, triazinethiol compound or phosphate-chromate treatment, although there is no limitation to these methods.

The thickness of the current collector layer of the disclosure is not particularly restricted and may be 3 $\mu$m or larger, 5 $\mu$m or larger, 10 $\mu$m or larger or 20 $\mu$m or larger, and 100 $\mu$m or smaller, 80 $\mu$m or smaller, 50 $\mu$m or smaller or 30 $\mu$m or smaller.

(Voids)

According to the disclosure, the voids are formed on the surface and/or in the layer on the current collector side of the active material layer of the electrode stack. For the purpose of the disclosure, "voids" are voids that are larger than the voids generated between the active material particles.

From the viewpoint of injectability during injection of the electrolyte solution and/or emission of gas during charge, and particularly from the viewpoint of emission of gas during charge, the voids preferably extend in the in-plane direction and reach to at least one edge of the active material layer, although this is not limitative.

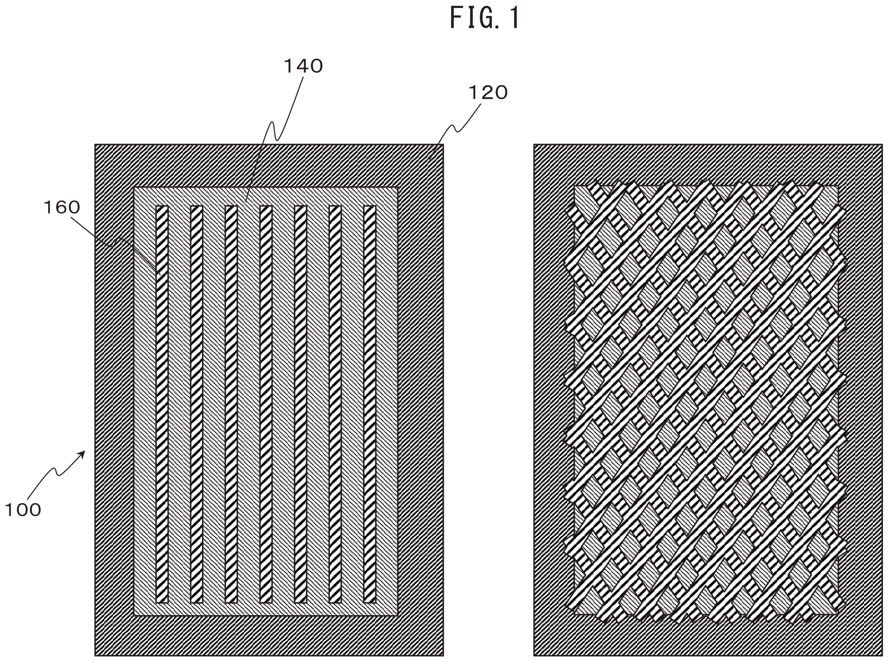

Fig. 1 is a cross-sectional view of an electrode stack in the in-plane direction at a location where the active material layer contains voids, but this merely illustrates an embodiment of the disclosure and is not intended to be limitative. According to the disclosure, the shapes of the voids are not particularly restricted, and for example, they may be striped or lattice-like, as shown in Fig. 1, or dotted. The shapes of the voids may have one or more of the following structures (i) to (iv).

(i) A structure in which the voids extend in the in-plane direction, spreading out in an approximately radial manner from an end face side near the injection hole of the active material layer, toward the other end face side of the active material layer.
(ii) A structure in which the voids form branched fluid channels extending in the in-plane direction
(iii) A structure in which the voids do not reach at least one edge of the active material layer
(iv) A structure in which the voids are spiral or spider web-like.

According to the disclosure, the maximum dimension of the voids is not particularly restricted and may be 10 $\mu$m or larger, 30 $\mu$m or larger, 50 $\mu$m or larger, 100 $\mu$m or larger, 150 $\mu$m or larger, 300 $\mu$m or larger, 500 $\mu$m or larger, 700 $\mu$m or larger, 1 mm or larger, 3 mm or larger, 5 mm or larger or 10 mm or larger, and 2000 mm or smaller, 1500 mm or smaller, 1000 mm or smaller, 700 mm or smaller, 500 mm or smaller, 100 mm or smaller, 50 mm to 30 mm, 10 mm or smaller, 5 mm or smaller, 1 mm or smaller, 500 $\mu$m or smaller, 300 $\mu$m or smaller, 100 $\mu$m or smaller, 50 $\mu$m or smaller or 30 $\mu$m or smaller. For the purpose of the disclosure, the "maximum dimension" is the maximum length in the in-plane direction of each of the voids.

For the present disclosure, the heights of the voids are not particularly restricted and may be 5 nm or greater, 10 nm or greater, 50 nm or greater, 100 nm or greater, 500 nm or greater, 1 $\mu$m or greater, 5 $\mu$m or greater, 10 $\mu$m or greater or 15 $\mu$m or greater, and 30 $\mu$m or smaller, 20 $\mu$m or smaller, 15 $\mu$m or smaller, 10 $\mu$m or smaller, 7 $\mu$m or smaller or 5 $\mu$m or smaller. For the purpose of the disclosure, the heights of the voids are the maximum lengths of the voids in the stacking direction of the electrode stack.

<Battery>

The battery of the disclosure comprises an electrode stack according to the disclosure. More specifically, the battery of the disclosure may comprise a positive electrode collector layer, a positive electrode active material layer, a separator layer or solid electrolyte layer, a negative electrode active material layer and a negative electrode collector layer, among which a combination of a positive electrode collector layer and a positive electrode active material layer, a combination of a negative electrode collector layer and a negative electrode active material layer, or both, may be the active material layer and current collector layer of the electrode stack of the disclosure.

<Method for producing electrode stack and method for producing battery>

The method for producing an electrode stack and a battery according to the disclosure comprises:

(a) coating the surface of the current collector layer or the surface of the electrode mixture layer on the current collector layer with ethylene carbonate in a specified pattern,
(b) coating the electrode mixture layer onto the surface of the current collector layer or electrode mixture layer on which the ethylene carbonate has been coated, to form an active material layer, and
(c) dissolving and/or melting the ethylene carbonate in the active material layer to form voids corresponding to the specified pattern.

Since ethylene carbonate is in a solid state at ordinary temperature (25°C) and is an electrolyte component, there is no need for drying removal of the ethylene carbonate after film formation. The method of the disclosure can therefore be effectively implemented for production of an electrode stack or production of a battery which uses a film-forming method in which the film-forming step does not include a drying step, such as dry film formation.

<Step of coating ethylene carbonate (step (a))>

In the methods for producing an electrode stack and battery according to the disclosure, first the surface of the current collector layer or the surface of the electrode mixture layer on the current collector layer is coated with ethylene carbonate in a specified pattern.

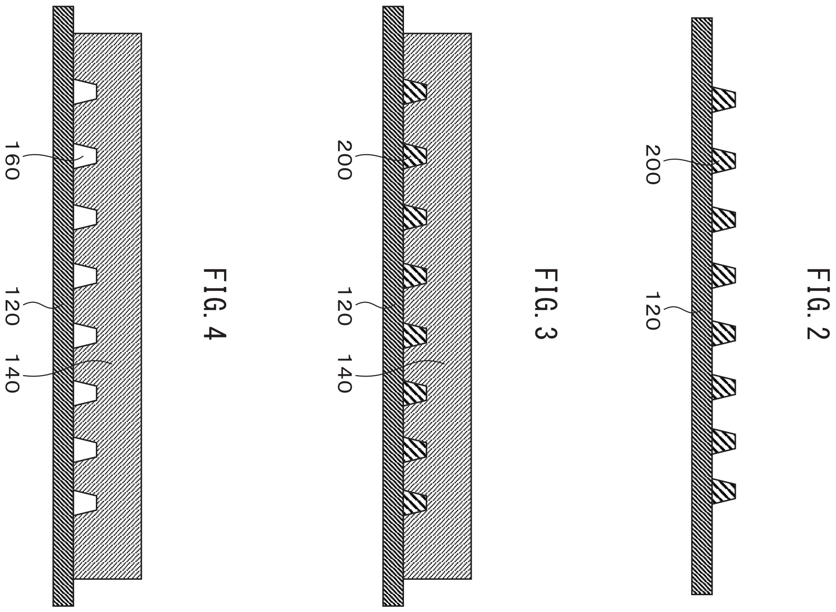

Fig. 2 shows an embodiment of the present disclosure, which however is not limitative. Ethylene carbonate 200 is coated onto a current collector layer 120. Voids 160 are formed in the electrode stack of the disclosure and in the battery, in at least parts of the section where the ethylene carbonate 200 has been coated.
For the purpose of the present disclosure, voids are formed in at least part of the ethylene carbonate-coated section. Specifically, when ethylene carbonate is coated onto the surface of the current collector layer, voids can be formed on the surface of the current collector layer side of the active material layer, and when ethylene carbonate is coated onto the surface of the electrode mixture layer on the current collector layer, voids can be formed inside the active material layer.
According to the disclosure, the current collector layer or the electrode mixture layer on the current collector layer may be at least partially heated prior to step (a). This improves the wettability for ethylene carbonate on the surface of the current collector layer or on the surface of the electrode mixture layer on the current collector layer, thereby allowing the ethylene carbonate to be coated in a uniform manner.
The method of coating the ethylene carbonate in step (a) is not particularly restricted. For example, heating the ethylene carbonate to a temperature at or above the melting point of ethylene carbonate (approximately 36.4°C) causes melting of the ethylene carbonate, to allow melted coating of the ethylene carbonate. The ethylene carbonate may also be coated after dissolution in a solvent that readily volatilizes.
Coating of the ethylene carbonate may be accomplished using a dispenser or gravure roll, for example, with no limitation to these, however.
According to the disclosure, the specified pattern is not particularly restricted and may be, for example, striped, lattice-like or dotted. The specified pattern of ethylene carbonate may have one or more of the following structures (i) to (iv).

(i) A structure in which the ethylene carbonate extends in the in-plane direction, spreading out in an approximately radial manner from an end face side near the injection hole of the active material layer, toward the other end face side of the active material layer.
(ii) A structure in which the ethylene carbonate forms branched fluid channels extending in the in-plane direction
(iii) A structure in which the ethylene carbonate does not reach at least one edge of the active material layer
(iv) A structure in which the ethylene carbonate is spiral or spider web-like.

For the purpose of the disclosure, the current collector layer may be cooled, and preferably quenched, after step (a) and before step (b). This allows the ethylene carbonate crystals to be micronized to form uniform voids. The active material layer may be cooled using a cooling roll, for example.

(Electrode mixture layer)

According to the disclosure, the electrode mixture layer is pressed to form an active material layer. The electrode mixture layer comprises an active material self-supporting film fabricated by coating the electrode mixture onto a substrate other than the current collector layer of the electrode stack, and then pressing it.

The details regarding the electrode mixture layer of the disclosure may be understood by referring to the description herein regarding the active material layer of the disclosure.

The electrode mixture layer of the disclosure preferably does not comprise an electrode mixture-dispersing solvent, but it may comprise an amount such that at least a portion of the ethylene carbonate coated in step (a) does not dissolve.

<Step (b)>

In the method for producing an electrode stack and a battery according to the disclosure, the electrode mixture layer is then coated onto the surface of the current collector layer or electrode mixture layer on which the ethylene carbonate has been coated, to form an active material layer.

Fig. 3 shows an embodiment of the present disclosure, which however is not limitative. An electrode mixture layer (not shown) is coated onto the side of the current collector layer 120 comprising the ethylene carbonate 200, to form an active material layer 140.

According to the disclosure, the method of coating the electrode mixture layer is not restricted, but is preferably coating by wet powder film formation or dry film formation, for example, without dissolution and/or melting of the ethylene carbonate. Particularly when the electrode mixture is to be directly coated onto the current collector layer for coating of the electrode mixture layer, the content of the electrode mixture-dispersing solvent that can dissolve ethylene carbonate, which may be present in the electrode mixture layer, may be lowered in order to help reduce dissolution of the ethylene carbonate coated in step (a) into the electrode mixture-dispersing solvent in step (b).

A previously fabricated active material self-supporting film may also be coated as an electrode mixture layer onto the current collector layer. When the active material self-supporting film is coated onto the current collector layer and then pressed, the density of the active material layer may differ between the locations of the active material layer with ethylene carbonate and the locations without ethylene carbonate. When the electrode mixture is directly coated onto the current collector layer to coat the electrode mixture layer, on the other hand, such difference in density can be reduced, so that the density of the active material layer at the locations with ethylene carbonate and the density of the active material layer at the locations without ethylene carbonate may be essentially the same.

The method of forming the active material layer may be pressing of the electrode mixture layer. The pressing may be carried out by roll pressing, for example. The pressure during roll pressing is not particularly restricted and may be 5 kN/cm or greater, 10 kN/cm or greater, 50 kN/cm or greater, 80 kN/cm or greater or 100 kN/cm or greater, and 500 kN/cm or lower, 300 kN/cm or lower, 200 kN/cm or lower or 100 kN/cm or lower.

For the purpose of the disclosure, the temperature of the production environment in step (b) is not particularly restricted, but in order to inhibit melting of the ethylene carbonate, it is preferably no higher than the melting point of the ethylene carbonate, such as 35°C or lower.

The active material layer may also be coated while optionally cooling in step (b). This can help inhibit melting of the ethylene carbonate.

<Step (c)>

In the method for producing an electrode stack and a battery according to the disclosure, the ethylene carbonate in the active material layer is then dissolved and/or melted to form voids corresponding to the specified pattern.

Fig. 4 shows an embodiment of the present disclosure, which however is not limitative. By dissolving and/or melting the ethylene carbonate 200 in the current collector layer 120, it is possible to form voids 160 at the locations where the ethylene carbonate 200 was present.

The method of dissolving and/or melting the ethylene carbonate in the active material layer according to the disclosure may be heating of the active material layer, with no particular restrictions. In the method of the disclosure, for example, the electrolyte solution may be injected into the active material layer to dissolve the ethylene carbonate.

In common methods for producing an electrode stack or a battery, a drying step is carried out after the step of coating the active material layer to remove the water in the electrode, and therefore the electrode stack may be heated in the drying step and the ethylene carbonate melted or evaporated to form voids.

In addition, the electrode stack may be heated with a heating unit before the drying step to heat the active material layer containing the ethylene carbonate, thereby melting the ethylene carbonate, and impregnating the active material layer with the ethylene carbonate to form voids.

Voids can also be formed by injecting an electrolyte solution into the battery comprising the electrode stack of the disclosure to dissolve the ethylene carbonate in the electrolyte solution. Since ethylene carbonate is a substance generally present in an electrolyte solution, battery performance is not affected, even if the ethylene carbonate is not completely removed from the active material layer in step (c) and the battery still contains ethylene carbonate in the active material layer.

According to the disclosure, when the electrode stack is heated with a heating member, the temperature of the heating member may be 35°C or higher, 40°C or higher, 45°C or higher, 50°C or higher or 60°C or higher, and 100°C or lower, 90°C or lower, 80°C or lower, 70°C or lower or 65°C or lower. When the temperature of the heating member is at or above the melting point of ethylene carbonate, in particular, it is possible to melt the ethylene carbonate in the active material layer. The heating member may be a flat sheet or roll, for example.

For the purpose of the disclosure, the electrolyte solution injected in step (c) is a liquid containing a solvent and a supporting electrolyte, for example. The electrolyte solution may be an aqueous electrolyte solution or a nonaqueous electrolyte solution. The composition of the electrolyte solution may be the same as publicly known for secondary battery electrolyte solutions. The electrolyte solution is not particularly restricted and may be of a single type alone, or two or more different types may be used in combination.

The solvent used in the electrolyte solution is also not particularly restricted, and may be a cyclic carbonate or straight-chain carbonate, for example. Examples of cyclic carbonates include, but are not limited to, ethylene carbonate (EC), propylene carbonate (PC) and butylene carbonate (BC). Examples of straight-chain carbonates include, but are not limited to, dimethyl carbonate (DMC), diethyl carbonate (DEC) and ethylmethyl carbonate (EMC).

According to the disclosure, when the electrolyte solution contains ethylene carbonate, the ethylene carbonate content of the electrolyte solution may be 0 vol% or greater, 5 vol% or greater, 7 vol% or greater, 10 vol% or greater, 15 vol% or greater or 20 vol% or greater, and 50 vol% or lower, 40 vol% or lower, 30 vol% or lower, 25 vol% or lower, 20 vol% or lower, 15% vol% or lower or 10 vol% or lower. For the purpose of the disclosure, the electrolyte solution that is injected during the injection step does not need to contain ethylene carbonate.

The supporting electrolyte of the electrolyte solution is not particularly restricted, and may be a lithium salt or sodium salt. Lithium salts include inorganic lithium salts and organic lithium salts. Examples of inorganic lithium salts include, but are not limited to, $LiPF_6$, $LiBF_4$, $LiClO_4$ and $LiAsF_6$. Examples of organic lithium salts include, but are not limited to, $LiCF_3SO_3$, $LiN(CF_3SO_2)_2$, $LiN(C_2F_5SO_2)_2$, $LiN(FSO_2)_2$ and $LiC(CF_3SO_2)_3$. Examples of sodium salts include, but are not limited to, $NaPF_6$.

The present disclosure will now be explained in further detail by Examples, with the understanding that the scope of the disclosure is not limited by these Examples.

EXAMPLES

<Example 1>

(Ethylene carbonate coating)

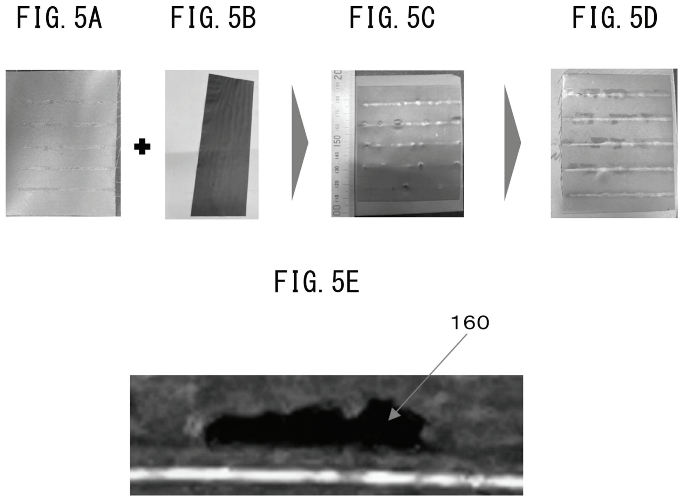

A composite foil comprising a copper foil and aluminum foil was prepared as a current collector layer. Ethylene carbonate was coated in a striped manner onto the copper foil of the composite foil. An ethylene carbonate-coated copper foil is shown in Fig. 5A.

(Fabrication of active material layer)

An active material self-supporting film was fabricated as an electrode mixture layer. The active material self-supporting film (Fig. 5B) was placed on the side of the composite foil comprising ethylene carbonate, and then roll-pressed under conditions of ordinary temperature, 14 kN/cm. The pressed current collector layer and active material layer are shown in Fig. 5C.

(Melting of ethylene carbonate)

The current collector layer with the active material layer was heated using a flat member under conditions of 37.0°C, to obtain an active material layer for Example 1. The active material layer of Example 1 is shown in Fig. 5D.

(Evaluation)

The fabricated active material layer was cut on a component-containing plane perpendicular to the direction of coating of the ethylene carbonate, and the cross-section was observed. The cross-sectional image is shown in Fig. 5E. Formation of voids 160 in the active material layer was confirmed, as shown in Fig. 5E.

REFERENCE SIGNS LIST

100 Electrode stack

120 Current collector layer

140 Active material layer

160 Void

200 Ethylene carbonate

**Claims**

1. An electrode stack having an active material layer and a current collector layer in contact with the active material layer, the electrode stack having voids with maximum dimensions of 10 $\mu$m or greater in the surface of the active material layer on the current collector layer side and/or in the active material layer.

2. The electrode stack according to claim 1, wherein the maximum dimension is 10 mm or greater.

3. An electrode stack according to claim 1, wherein the density of the active material layer on the stacking direction side of the voids is essentially the same as the density of the active material layer at the locations where the voids are not present.

4. The electrode stack according to claim 1, wherein at least a portion of the surface of the current collector layer on the active material layer side is subjected to chemical conversion treatment.

5. The electrode stack according to claim 1, wherein the voids have one or more of the following structures:

   (i) a structure in which the voids extend out in the in-plane direction in an approximately radial manner from one end face side near the injection hole of the active material layer, toward the other end face side of the active material layer,
   (ii) a structure in which the voids form branched fluid channels extending in the in-plane direction,
   (iii) a structure in which the voids do not reach to at least one edge of the active material layer, and
   (iv) a structure in which the voids are spiral or spider web-like.

6. A battery having an electrode stack according to any one of claims 1 to 5.

7. A method for producing an electrode stack according to any one of claims 1 to 5 or a method for producing a battery according to claim 6, the method comprising:

   (a) coating the surface of the current collector layer or the surface of the electrode mixture layer on the current collector layer with ethylene carbonate in a specified pattern,
   (b) coating the electrode mixture layer onto the surface of the current collector layer or the electrode mixture layer on which the ethylene carbonate has been coated, to form an active material layer, and
   (c) dissolving and/or melting the ethylene carbonate in the active material layer to form voids corresponding to the specified pattern.

8. The method according to claim 7, wherein in step (c), the electrolyte solution is injected into the active material layer to dissolve the ethylene carbonate.

9. The method according to claim 8, wherein the electrolyte solution does not contain ethylene carbonate.

10. The method according to claim 7, which includes at least partial heating of the current collector layer or the electrode mixture layer on the current collector layer, before step (a).

11. The method according to claim 7, which includes a step of cooling the current collector layer, after step (a) and before step (b).

# FIG. 1

EP 4 760 788 A1

# FIG. 2

200   120

# FIG. 3

200   120   140

# FIG. 4

160   120   140

FIG. 5A　　FIG. 5B　　FIG. 5C　　FIG. 5D

FIG. 5E

## EUROPEAN SEARCH REPORT

**Application Number**

EP 25 20 9067

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 869 137 B1 (LG CHEMICAL LTD [KR]) 19 June 2018 (2018-06-19) | 1-6 | INV. |
| A | * paragraphs [0104] - [0107], [0112] - [0114], [0117] * <br> * figures 2-4 * | 7-11 | H01M4/04 <br> H01M4/13 <br> H01M4/139 <br> H01M10/42 <br> H01M50/35 |
| X | US 2018/062208 A1 (LEE KO TAO [US] ET AL) 1 March 2018 (2018-03-01) <br> * paragraphs [0019], [0029]; figure 1d * | 1,3,6 | |
| A | EP 3 706 224 A1 (PANASONIC IP MAN CO LTD [JP]) 9 September 2020 (2020-09-09) <br> * the whole document * | 1-11 | |

**TECHNICAL FIELDS SEARCHED (IPC)**

H01M

The present search report has been drawn up for all claims

| Place of search | Date of completion of the search | Examiner |
|---|---|---|
| Munich | 27 March 2026 | Gregori, Giuliano |

EPO FORM 1503 03.82 (P04C01)

## ANNEX TO THE EUROPEAN SEARCH REPORT
## ON EUROPEAN PATENT APPLICATION NO.

EP 25 20 9067

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2026

| Patent document cited in search report | | Publication date | Patent family member(s) | | Publication date |
|---|---|---|---|---|---|
| KR 101869137 | B1 | 19-06-2018 | NONE | | |
| US 2018062208 | A1 | 01-03-2018 | NONE | | |
| EP 3706224 | A1 | 09-09-2020 | CN | 111226340 A | 02-06-2020 |
| | | | EP | 3706224 A1 | 09-09-2020 |
| | | | JP | 7236645 B2 | 10-03-2023 |
| | | | JP | WO2019087709 A1 | 12-11-2020 |
| | | | US | 2021159536 A1 | 27-05-2021 |
| | | | WO | 2019087709 A1 | 09-05-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004207253 A
- WO 2008053880 A
- JP 2004006275 A
- JP 2012181978 A
- JP 2024092439 A
- JP 6333550 A